# EUROPEAN PATENT APPLICATION

(11) **EP 4 365 051 A1**
(43) Date of publication of application: **08.05.2024**
(21) Application number: 21951332.2
(22) Date of filing: 30.07.2021
(51) Int. Cl.: B60W 50/14, B60W 40/02, B60W 40/08, G08G 1/16, G06F 30/27

(54) **VEHICLE CONTROL METHOD AND APPARATUS THEREOF**

(71) Applicant: Huawei Technologies Co., Ltd., Longgang Shenzhen, Guangdong 518129 (CN)
(72) Inventor: WANG, Zhen, Shenzhen, Guangdong 518129 (CN); CHEN, Yuying, Shenzhen, Guangdong 518129 (CN); YANG, Yilun, Shenzhen, Guangdong 518129 (CN); WANG, Xinyu, Shenzhen, Guangdong 518129 (CN)
(74) Representative: Goddar, Heinz J.
(86) International application number: PCT/CN2021/109557
(87) International publication number: WO 2023/004736

(57) **Abstract**

A vehicle control method and an apparatus using the vehicle control method are provided. The control method includes: obtaining sight information of a driver, where the sight information includes a focus sector of the driver, and the focus sector includes at least one of a plurality of field of view sectors of a vehicle (1101); and obtaining a control policy of the vehicle based on at least the sight information (1102). In this control method, the focus sector represents a field of view range of the driver, and stability of a detection result of the field of view range is improved, so that accuracy of vehicle control is improved.

## Description

### TECHNICAL FIELD

Embodiments of this application relate to the field of intelligent vehicles, and more specifically, to a vehicle control method and an apparatus thereof.

### BACKGROUND

With the development of intelligent vehicle technologies, vehicle information, environmental information, driver information, and the like of a vehicle may be obtained from sensor, and then the vehicle is controlled based on the information.

Currently, there is an anti-collision warning solution that considers a field of view range of a driver. In such circumstances, a warning policy is obtained based on both a distance between a driver's vehicle and a vehicle within a field of view angle range of the driver and a distance between the driver's vehicle and a vehicle beyond the field of view angle range of the driver. However, some subtle actions of the driver such as a slight head deviation may cause a constant change of the field of view angle range, resulting in an excessively frequent change of the warning policy, and low warning accuracy.

Therefore, how to improve stability of field of view range detection to improve accuracy of vehicle control is a technical problem to be urgently resolved.

### SUMMARY

Embodiments of this application provide a vehicle control method and an apparatus thereof, to improve stability of field of view range detection, thereby improving accuracy of vehicle control.

According to a first aspect, a vehicle control method is provided. The method includes: obtaining sight information of a driver, and obtaining a control policy based on at least the sight information. The foregoing sight information includes a focus sector of the driver, and the focus sector includes at least one of a plurality of field of view sectors of a vehicle.

In the technical solution of this application, the focus sector represents a field of view range of the driver, so that stability of field of view range detection is improved, thereby improving accuracy of vehicle control.

In the conventional technology, because only a field of view angle range is considered, when the driver slightly rotates eyeballs or the like, the field of view angle range may change. This is quite unstable, and causes a relatively large difficulty and error to subsequent vehicle control. However, in this embodiment of this application, in terms of field of view sectors, all possible field of view ranges of the driver are divided into a plurality of areas, that is, a plurality of sectors. The focus sector is an area at which the driver looks. A detection result of this field of view range is relatively stable, and a case in which the detection result constantly jumps due to a subtle action such as a head deviation of the driver does not occur, so that accuracy of vehicle control is improved.

The sight information may be obtained through the following process: a line-of-sight direction of the driver is obtained with a sensing device such as a camera or an eye tracker, and then the foregoing focus sector is determined based on the line-of-sight direction.

With reference to the first aspect, in some implementations of the first aspect, when the control policy is obtained based on the sight information, the control policy may be obtained based on the sight information and vehicle information of the vehicle. The vehicle information includes at least one of the following: a steering wheel angle, an angular velocity, a turn signal, or a vehicle speed. The vehicle information may be understood as chassis information or vehicle information.

With reference to the first aspect, in some implementations of the first aspect, when the control policy is obtained based on the sight information and the vehicle information of the vehicle, the following steps may be performed: processing the sight information and the vehicle information by using a trained neural network model to obtain a driving intention of the driver, and obtaining the control policy based on the driving intention. The driving intention may be lane keeping, turning, or lane changing, or the driving intention may be acceleration, deceleration, parking, or the like. However, it should be understood that acceleration, deceleration, parking, or the like may also be considered as a case included in lane keeping.

With reference to the first aspect, in some implementations of the first aspect, the foregoing plurality of field of view sectors include the following: a field of view sector of a left vehicle window, a field of view sector of a left rearview mirror, a field of view sector of a front vehicle window, a field of view sector of an in-vehicle rearview mirror, a field of view sector of a right vehicle window, and a field of view sector of a right rearview mirror.

With reference to the first aspect, in some implementations of the first aspect, the field of view sector of the front vehicle window may include a left field of view sector of the front vehicle window and a right field of view sector of the front vehicle window. Because a field of view area of the front vehicle window is relatively large, the driver may not focus on the entire front vehicle window area. For example, when the driver turns right, the driver looks to the right, and in this case, the driver looks out only through a right area of the front vehicle window. Therefore, to further improve accuracy of determining the focus sector, the field of view sector of the front vehicle window may be divided into the left field of view sector of the front vehicle window and the right field of view sector of the front vehicle window, that is, the field of view sector of the front vehicle window is divided into two parts.

With reference to the first aspect, in some implementations of the first aspect, the focus sector may be obtained based on at least a blind zone and/or an obstacle.

With reference to the first aspect, in some implementations of the first aspect, the focus sector may be obtained based on at least a line-of-sight direction of the driver.

With reference to the first aspect, in some implementations of the first aspect, the control policy may include at least one of the following: an anti-collision warning policy, an autonomous emergency braking policy, an adaptive cruise control policy, a lane departure warning policy, a lane keeping assist policy, or a lane centering assist policy.

Optionally, a display unit (display apparatus) having a display function, such as a human-machine interaction interface or a display screen, may be further used to present the focus sector. With reference to the first aspect, in some implementations of the first aspect, the foregoing method further includes: displaying the focus sector by using the display unit.

Optionally, a reaction time may further be introduced, and the control policy may be obtained with reference to the reaction time. With reference to the first aspect, in some implementations of the first aspect, the control policy may be obtained based on the reaction time and the focus sector, or the control policy may be obtained based on the reaction time and the driving intention, or the control policy may be obtained based on the reaction time, the driving intention, and the focus sector. For introduction of the reaction time, not only the focus sector is considered, but also an attention situation of the driver is considered, so that a driving risk caused by insufficient attention of the driver is alleviated. Therefore, accuracy of vehicle control and safety of vehicle driving can be further improved.

According to a second aspect, a vehicle control apparatus is provided. The apparatus includes units configured to perform the method in any implementation of the first aspect.

According to a third aspect, a vehicle control apparatus is provided. The apparatus includes: a memory, configured to store a program; and a processor, configured to execute the program stored in the memory. When the program stored in the memory is executed, the processor is configured to perform the method in any implementation of the first aspect. The apparatus may be disposed in various devices or systems that need to perform vehicle control. The apparatus may alternatively be a chip.

According to a fourth aspect, a computer-readable medium is provided. The computer-readable medium stores program code to be executed by a device, and the program code includes instructions used to perform the method in any implementation of the first aspect.

According to a fifth aspect, a computer program product including instructions is provided. When the computer program product is run on a computer, the computer is enabled to perform the method in any implementation of the first aspect.

According to a sixth aspect, a chip is provided. The chip includes a processor and a data interface, and the processor reads, by using the data interface, instructions stored in a memory, to perform the method in any implementation of the first aspect.

Optionally, in an implementation, the chip may further include the memory. The memory stores the instructions, the processor is configured to execute the instructions stored in the memory, and when executing the instructions, the processor is configured to perform the method in any implementation of the first aspect.

### BRIEF DESCRIPTION OF DRAWINGS

FIG. 1 is a schematic diagram of a structure of a vehicle control apparatus according to an embodiment of this application;
FIG. 2 is a schematic diagram of field of view sectors of a vehicle according to an embodiment of this application;
FIG. 3 is a schematic diagram of field of view sectors according to an embodiment of this application;
FIG. 4 is a schematic diagram of a focus sector according to an embodiment of this application;
FIG. 5 to FIG. 10 are schematic diagrams of application of vehicle control solutions according to an embodiment of this application;
FIG. 11 is a schematic flowchart of a vehicle control method according to an embodiment of this application;
FIG. 12 is a schematic diagram of a method for obtaining attention information according to an embodiment of this application;
FIG. 13 is a schematic diagram of a vehicle control process according to an embodiment of this application;
FIG. 14 is a schematic block diagram of a vehicle control apparatus according to an embodiment of this application; and
FIG. 15 is a schematic diagram of a hardware structure of a vehicle control apparatus according to an embodiment of this application.

### DESCRIPTION OF EMBODIMENTS

The following describes technical solutions in embodiments in this application with reference to accompanying drawings.

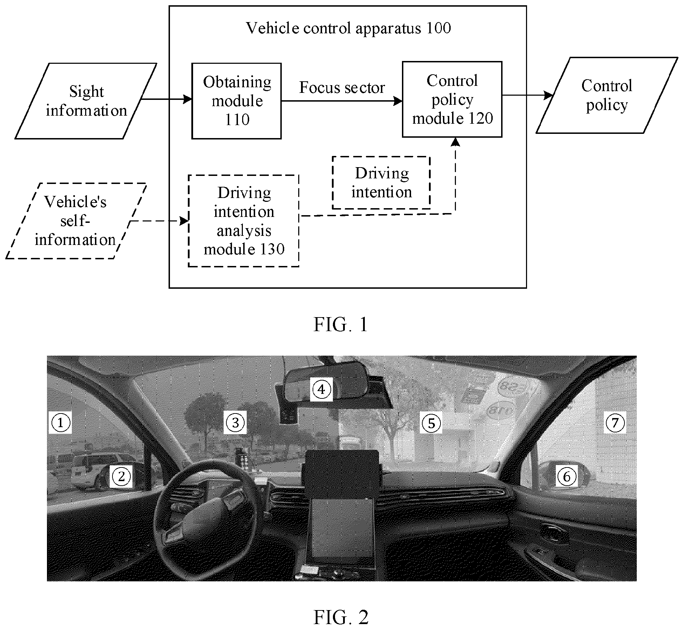

FIG. 1 is a schematic diagram of a structure of a vehicle control apparatus according to an embodiment of this application. As shown in FIG. 1, the vehicle control apparatus 100 may include an obtaining module 110 and a control policy module 120. The vehicle control apparatus 100 may be a module in an in-vehicle terminal or a control unit of a vehicle.

The obtaining module 110 is configured to obtain sight information of a driver. The sight information includes a focus sector of the driver, and the focus sector includes at least one of a plurality of field of view sectors of the vehicle.

The sight information may be obtained through the following process: a line-of-sight direction of the driver is obtained with a sensing device such as a camera or an eye tracker, and then the focus sector is determined based on the line-of-sight direction. In this process, the obtaining module 110 may directly obtain the sight information; or may first obtain the line-of-sight direction from the sensing device, and then obtain the sight information based on the line-of-sight direction; or may obtain an image and the like including the line-of-sight direction (in a case in which the sensing device is also integrated into the obtaining module 110), and then extract the line-of-sight direction from the image and obtain the sight information based on the line-of-sight direction. In other words, the obtaining module 110 may be the foregoing sensing device, a device that can obtain the line-of-sight direction and determine the sight information based on the line-of-sight direction, an interface circuit or a reading apparatus that can read the sight information from a storage apparatus, or a communication interface that can obtain the sight information by using a network.

The line-of-sight direction may be understood as an orientation of a line-of-sight, and may be represented with a line, or may be represented with an angle, for example, an included angle between the line-of-sight direction and a vehicle traveling direction.

In the conventional technology, because only a field of view angle range is considered, when the driver slightly rotates eyeballs or the like, the field of view angle range may change. This is quite unstable, and causes a relatively large difficulty and error to subsequent vehicle control. However, in this embodiment of this application, in terms of field of view sectors, all possible field of view ranges of the driver are divided into a plurality of areas, that is, a plurality of sectors. The focus sector is an area at which the driver looks. A detection result of this field of view range is relatively stable, and a case in which the detection result constantly jumps due to a subtle action such as a head deviation of the driver does not occur, so that accuracy of vehicle control is improved.

In some implementations, the field of view sector may include at least one of the following: a field of view sector of a left vehicle window, a field of view sector of a left rearview mirror, a field of view sector of a front vehicle window, a field of view sector of an in-vehicle rearview mirror, a field of view sector of a right vehicle window, and a field of view sector of a right rearview mirror. The field of view sector of the front vehicle window may further include a left field of view sector of the front vehicle window and a right field of view sector of the front vehicle window. The field of view sector of the left vehicle window is a field of view area that can be seen by the driver from the left vehicle window. The field of view sector of the left rearview mirror is a field of view area that can be seen by the driver from the left rearview mirror. The field of view sector of the front vehicle window is a field of view area that can be seen by the driver from the front vehicle window. The field of view sector of the in-vehicle rearview mirror is a field of view area that can be seen by the driver from the in-vehicle rearview mirror. The field of view sector of the right vehicle window is a field of view area that can be seen by the driver from the right vehicle window. The field of view sector of the right rearview mirror is a field of view area that can be seen by the driver from the right vehicle window. Because the field of view area of the front vehicle window is relatively large, the driver may not focus on the entire front vehicle window area. For example, when the driver turns right, the driver looks to the right, and in this case, the driver looks out only through a right area of the front vehicle window. Therefore, to further improve accuracy of determining the focus sector, the field of view sector of the front vehicle window may be divided into a left field of view sector of the front vehicle window and a right field of view sector of the front vehicle window, that is, the field of view sector of the front vehicle window is divided into two parts.

For ease of understanding, the following describes the field of view sectors and the focus sector with reference to FIG. 2 to FIG. 4, and details are not described herein again.

The control policy module 120 is configured to obtain a control policy based on the sight information.

In some implementations, the control policy module 120 may perform control on the vehicle based on the focus sector in the sight information. The control may be driving assistance control or autonomous driving control. For example, the control policy module 120 may control acceleration, deceleration, lane changing, turning, parking, obstacle avoidance, or various warnings of the vehicle.

The foregoing control policy may include at least one of the following: an anti-collision warning policy, an autonomous emergency braking (autonomous emergency braking, AEB) policy, an adaptive cruise control (adaptive cruise control, ACC) policy, a lane departure warning (lane departure warning, LDW) policy, a lane keeping assist (lane keeping assist, LKA) policy, a lane centering assist policy (lane centering control, LCC), or the like.

The anti-collision warning policy is to issue a warning when the vehicle has a collision risk. For example, it may be determined, based on the focus sector, whether the driver has a risk of collision with an obstacle, to determine whether a warning needs to be issued. For example, it is assumed that there are three cases. Case 1: The obstacle is not in the focus sector of the driver, and is on a traveling track of the vehicle. Case 2: The obstacle is not in the focus sector of the driver, but is not on a traveling track of the vehicle. Case 3: The obstacle is in the focus sector of the driver, and is not on a traveling track of the vehicle. It is obvious that a collision risk in Case 1 is far higher than collision risks in Case 2 and Case 3, and Case 3 does not affect traveling of the vehicle. Therefore, different levels of warning may be issued for Case 1 and Case 2, and no warning is issued for Case 3.

For another control policy such as the autonomous emergency braking policy, the adaptive cruise control policy, the lane departure warning policy, or the lane keeping assist policy, a control action on the vehicle may also be determined with reference to the foregoing case, and details are not described one by one.

In some implementations, the control policy module 120 may further obtain a driving intention of the driver based on the sight information and vehicle information. The driving intention may be lane keeping, turning, lane changing, or the like, or may be acceleration, deceleration, parking, or the like.

The vehicle information may be understood as chassis information or vehicle information. The vehicle information may include at least one of the following: a steering wheel angle, an angular velocity, a turn signal, or a vehicle speed. For example, assuming that the focus sectors of the driver are the field of view sector of the left rearview mirror and the field of view sector of the left vehicle window, and a left turn light flashes, it may be inferred that the driving intention of the driver is to change a lane to the left. Assuming that the focus sectors of the driver are the left field of view sector of the front vehicle window and the field of view sector of the left vehicle window, and the left turn light flashes, it may be inferred that the driving intention of this driver is to turn left.

In some other implementations, the control policy module 120 may further obtain the control policy based on the driving intention and the sight information. For example, assuming that the driving intention of the driver is lane keeping, a static obstacle in another lane may not be considered. The control policy may be obtained based only on the driving intention, or the control policy may be obtained based on the driving intention and the sight information. Alternatively, the control policy may be further obtained with reference to another factor such as a predicted traveling track of the vehicle.

Optionally, the sight information may be processed with a model such as a trained neural network model, to obtain the driving intention. The neural network model may be understood as a model that establishes a correspondence between an input and an output. The input is the sight information and the vehicle information, and the output is the driving intention. It may be understood that the neural network model establishes a mapping relationship between input data and a label. Herein, a mapping relationship between the sight information and the driving intention and a mapping relationship between the vehicle information and the driving intention are established. Training makes the foregoing mapping relationships more accurate. The neural network model may be a convolutional neural network (convolutional neuron network, CNN), a recurrent neural network (recurrent neural network, RNN), a long short-term memory (long short-term memory, LSTM) neural network, or the like. Training data includes input data and a label, the input data includes the sight information and the vehicle information, the label includes the driving intention, and each piece of input data corresponds to one label. In a training process, the training data is used to update parameters of the neural network model (for example, an initial neural network model), to obtain a trained neural network model. The trained neural network model may be used in the foregoing vehicle control method.

It should be noted that the neural network model usually relates to a training process and an inference process. In the training process, training data with a label is used to train the initial neural network model (which may be understood as a neural network model that is not trained herein). That is, the training data with the label is used to update the parameters of the neural network model. In the inference process, the trained neural network model (that is, the neural network model with updated parameters) is used to process to-be-processed data (for example, the foregoing obtained sight information and vehicle information), to obtain an inference result. This inference result is a driving intention corresponding to the to-be-processed data. Optionally, the vehicle control apparatus 100 may further include a display unit. This display unit may be configured to display the focus sector, that is, the focus sector is presented with the display unit. This display unit may be, for example, a human-machine interaction interface or an in-vehicle display screen. The human-machine interaction interface may also be referred to as a human-machine interface (human machine interaction, HMI), a user interface, a user interface, an interaction interface, or the like.

In some other implementations, the control policy module 120 may further obtain the control policy based on a reaction time and information such as the focus sector and the driving intention. The reaction time is a time for the driver to take a response measure when the driver encounters an emergency. For example, when the driver brakes in an emergency, a time from a moment when the driver sees an obstacle to a moment when the driver performs emergency braking is the reaction time. In addition to reaction sensitivity of the driver, the response time is also related to an attention degree of the driver. Therefore, the reaction time of the driver may be inferred through detection of the attention degree of the driver. For example, it is assumed that the driver is concentrating in driving, the attention degree is relatively high, and the response time is relatively short. In this case, if an emergency occurs, the driver can quickly process the emergency. However, if the driver is looking around, or is absent-minded, dozing, or the like, the attention degree is relatively low, and the response time is relatively long. In this case, if an emergency occurs, the driver may not respond in time.

Optionally, attention information may be obtained based on the vehicle information and driver status monitoring information. A driver status monitoring system (driver monitoring system, DMS) may be used to obtain facial image information of the driver to obtain the driver status monitoring information. A method for obtaining the attention information is described in detail below, and details are not described herein.

For introduction of the reaction time, not only the focus sector is considered, but also an attention situation of the driver is considered, so that a driving risk caused by insufficient attention of the driver is alleviated. Therefore, accuracy of vehicle control and safety of vehicle driving can be further improved.

FIG. 2 is a schematic diagram of field of view sectors of a vehicle according to an embodiment of this application. As shown in FIG. 2, the field of view sectors of the vehicle include: ① the field of view sector of the left vehicle window, ② the field of view sector of the left rearview mirror, ③ the left field of view sector of the front vehicle window, ④ the field of view sector of the in-vehicle rearview mirror, ⑤ the right field of view sector of the front vehicle window, ⑥ the field of view sector of the right rearview mirror, and (7) the field of view sector of the right vehicle window.

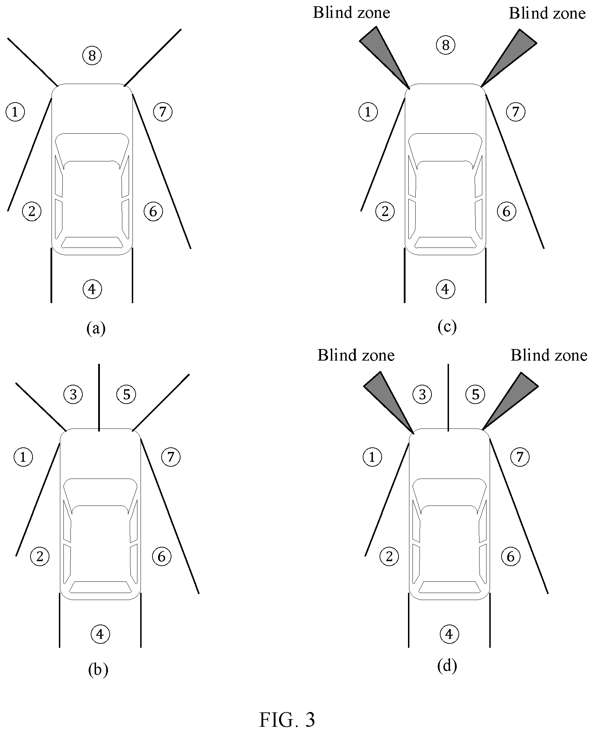

FIG. 3 is a schematic diagram of field of view sectors according to an embodiment of this application. As shown in (a) in FIG. 3, the field of view sectors of the vehicle include: ① the field of view sector of the left vehicle window, ② the field of view sector of the left rearview mirror, ④ the field of view sector of the in-vehicle rearview mirror, ⑥ the field of view sector of the right rearview mirror, ⑦ the field of view sector of the right vehicle window, and ⑧ the field of view sector of the front vehicle window. As shown in (b) in FIG. 3, the field of view sectors of the vehicle include: ① the field of view sector of the left vehicle window, ② the field of view sector of the left rearview mirror, ③ the left field of view sector of the front vehicle window, ④ the field of view sector of the in-vehicle rearview mirror, ⑤ the right field of view sector of the front vehicle window, ⑥ the field of view sector of the right rearview mirror, and (7) the field of view sector of the right vehicle window. A difference between (b) and (a) lies in that, the sector of the front vehicle window in (b) is divided into left and right areas. This is more accurate. As shown in (c) in FIG. 3, the field of view sectors of the vehicle include: ① the field of view sector of the left vehicle window, ② the field of view sector of the left rearview mirror, ④ the field of view sector of the in-vehicle rearview mirror, ⑥ the field of view sector of the right rearview mirror, ⑦ the field of view sector of the right vehicle window, and ⑧ the field of view sector of the front vehicle window. A difference between (c) and (a) lies in that (c) further shows two blind zones that are at two sides of the front and that are caused by the structure of the vehicle. This can also improve accuracy. As shown in (d) in FIG. 3, the field of view sectors of the vehicle include: ① the field of view sector of the left vehicle window, ② the field of view sector of the left rearview mirror, ③ the left field of view sector of the front vehicle window, ④ the field of view sector of the in-vehicle rearview mirror, ⑤ the right field of view sector of the front vehicle window, ⑥ the field of view sector of the right rearview mirror, and ⑦ the field of view sector of the right vehicle window. A difference between (d) and (b) lies in that (d) further shows two blind zones.

It should be understood that the blind zone is not the field of view sector, but may be included in a field of view sector, because the driver has no field of view in the blind zone. The field of view sector ⑧ of the front vehicle window in (c) in FIG. 3 may be considered as being obtained through removal of two blind zones from the field of view sector ⑧ of the front vehicle window in (a).

FIG. 3 shows only several examples of division of the field of view sectors. In an actual situation, there may be another division manner. For example, small round mirrors are further mounted on rearview mirrors on two sides of some vehicles. In this case, field of views obtained by the driver from the small round mirrors may be divided into a field of view sector of a round mirror on the left rearview mirror and a field of view sector of a round mirror on the right rearview mirror. For another example, a large vehicle has a relatively large quantity of field of view blind zones. Therefore, for each field of view sector, a coverage angle of a field of view sector of the large vehicle may be different. For another example, for a blind zone problem, a corresponding camera may be mounted on the vehicle. In this case, a field of view displayed on a display screen of the camera may also be divided into one field of view sector. Examples are not listed one by one herein.

The focus sector is a field of view sector included in an actual field of view of the driver. Therefore, the focus sector includes at least one field of view sector in the foregoing plurality of field of view sectors. For example, it is assumed that the driver wants to turn right, and the line-of-sight direction is right front. In this case, the focus sector of the driver includes the right field of view sector of the front vehicle window and the field of view sector of the left vehicle window. The driver may further observe the rearview mirror. In this case, the focus sector of the driver includes the field of view sector of the right rearview mirror.

As shown in FIG. 3, a field of view sector may include or may not include a blind zone. Therefore, when the focus sector is determined, a blind zone may be further considered. Although the blind zone may be included in a field of view sector, the driver cannot actually observe a situation of the blind zone. Therefore, to improve accuracy, the focus sector may be obtained based on blind zone information. The focus sector may be tailored to remove the blind zone in the focus sector. When the focus sector does not include the blind zone, accuracy of the sight information can be improved.

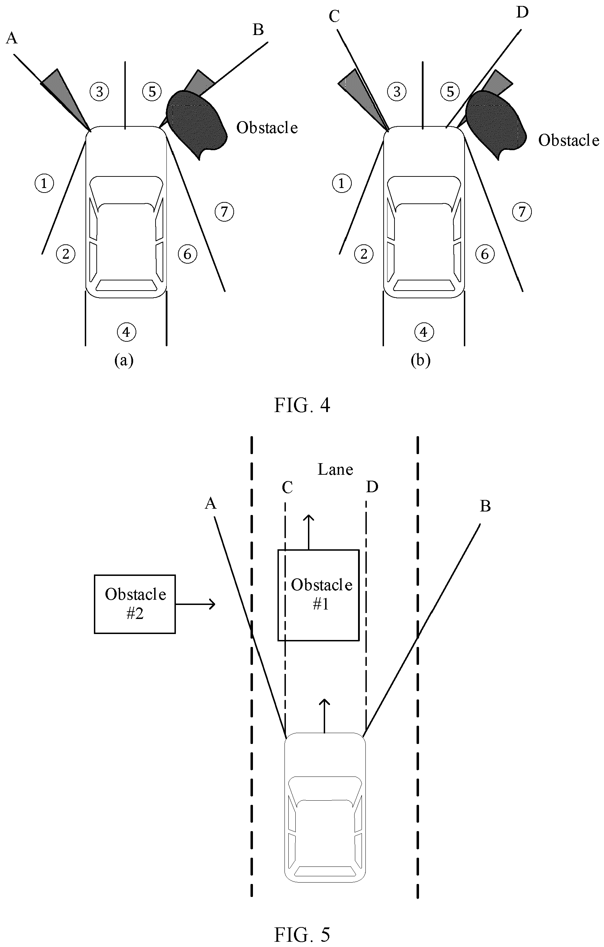

In addition, the focus sector may further be obtained in consideration of impact of an obstacle, that is, the focus sector may be obtained based on obstacle information. With reference to FIG. 4, the following describes how to determine the focus sector when impact of the blind zone and the obstacle is considered.

FIG. 4 is a schematic diagram of a focus sector according to an embodiment of this application. As shown in (a) in FIG. 4, field of view areas of the vehicle include: ① the field of view sector of the left vehicle window, ② the field of view sector of the left rearview mirror, ③ the left field of view sector of the front vehicle window, ④ the field of view sector of the in-vehicle rearview mirror, ⑤ the right field of view sector of the front vehicle window, ⑥ the field of view sector of the right rearview mirror, and ⑦ the field of view sector of the right vehicle window. Two blind zones are shown. It is assumed that the field of view of the driver is an area between a straight line A and a straight line B. It can be seen from (a) in FIG. 4 that this field of view actually includes the two blind zones, the left field of view sector ③ of the front vehicle window, and the right field of view sector ⑤ of the front vehicle window. A small part of the right field of view sector ⑤ of the front vehicle window is blocked by an obstacle. In this case, the blind zones and the part blocked by the obstacle may be removed to obtain a focus sector shown in (b) in FIG. 4. As shown in (a) in FIG. 4, the field of view of the driver is an area between a straight line C and a straight line D, and the focus sector includes only the left field of view sector ③ of the front vehicle window, and the right field of view sector ⑤ of the front vehicle window.

As described above, the vehicle control solution in this embodiment of this application may be applied to various scenarios such as autonomous driving and driving assistance. For example, some driving assistance functions may be implemented with reference to an advanced driver assistance system (advanced driver assistance system, ADAS). For ease of understanding, the following provides descriptions with reference to FIG. 5 to FIG. 10.

FIG. 5 to FIG. 10 are schematic diagrams of application of vehicle control solutions according to an embodiment of this application, and specifically, are examples of determining the control policy with reference to the sight information and the driving intention.

For ease of understanding, some elements in the figures are first described. Bold and parallel dashed lines in the figures represent lane lines, and the focus sector is represented with two straight lines. For example, an area between a straight line A and a straight line B is the focus sector, and an area between a straight line E and a straight line F is also the focus sector. A predicted traveling track of the vehicle is represented with two curves. For example, an area between a curve C and a curve D is a passing area of the vehicle when the vehicle travels based on the predicted traveling track, and a curve G and a curve H are also a predicted traveling track of the vehicle. However, the curve C and the curve D are the predicted traveling track obtained when the driving intention is considered, and the curve G and the curve H are the predicted traveling track obtained when the driving intention is not considered. An object with an arrow indicates that the object moves relative to the ground, an arrow direction is a motion direction, and an object without an arrow indicates that the object is static relative to the ground. For example, an obstacle with an arrow indicates an obstacle that is moving, and an obstacle without an arrow indicates a static obstacle.

In an anti-collision warning scenario shown in FIG. 5, the focus sector of the driver is an area between a straight line A and a straight line B in FIG. 5. To be specific, the focus sector includes the field of view sector of the front vehicle window (or the left field of view sector of the front vehicle window and the right field of view sector of the front vehicle window). The driving intention of the driver is lane keeping. A curve C and a curve D represent the predicted traveling track of the vehicle. An obstacle #1 is a moving object in the focus sector, and an obstacle #2 is a moving object outside the focus sector. A moving direction of the obstacle #1 is consistent with a moving direction of the vehicle, and a moving direction of the obstacle #2 overlaps the predicted traveling track of the vehicle. In this scenario, the obstacle #2 may pose a danger. Therefore, an anti-collision warning needs to be issued. That is, an obtained control policy is: issuing the anti-collision warning.

It should be noted that, in the application scenarios of the vehicle control solutions shown in FIG. 5 to FIG. 10, a warning signal may be presented in a plurality of manners such as sound, warning light flashing, or picture presentation. This is not limited. For example, in the scenario shown in FIG. 5, assuming that the control policy for issuing the anti-collision warning is obtained, the driver may be reminded of a collision risk in a manner such as a sound prompt, or a warning prompt may be performed in a manner of warning light flashing, or a warning prompt may be performed in a manner of presentation on the human-machine interaction interface or the in-vehicle display screen. These warning prompt manners may also be used in a superposition manner, for example, in a manner of both warning light flashing and a sound alarm, and are not listed one by one.

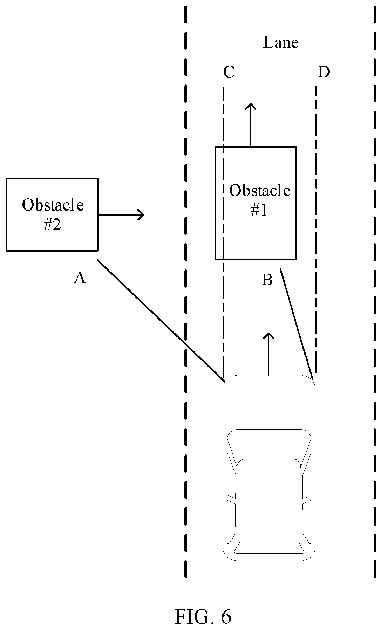

In an anti-collision warning scenario shown in FIG. 6, the focus sector of the driver is an area between a straight line A and a straight line B in FIG. 6. To be specific, the focus sector includes the left field of view sector of the front vehicle window and the field of view sector of the left vehicle window. The driving intention of the driver is lane keeping. A curve C and a curve D represent the predicted traveling track of the vehicle. Both an obstacle #1 and an obstacle #2 are moving objects in the focus sector. A moving direction of the obstacle #1 is consistent with a moving direction of the vehicle, and a moving direction of the obstacle #2 overlaps the predicted traveling track of the vehicle. In this scenario, although the obstacle #2 may pose a danger, the driver has noticed the obstacle #2. Therefore, in this case, the anti-collision warning may not be issued. That is, an obtained control policy is that the anti-collision warning is not issued.

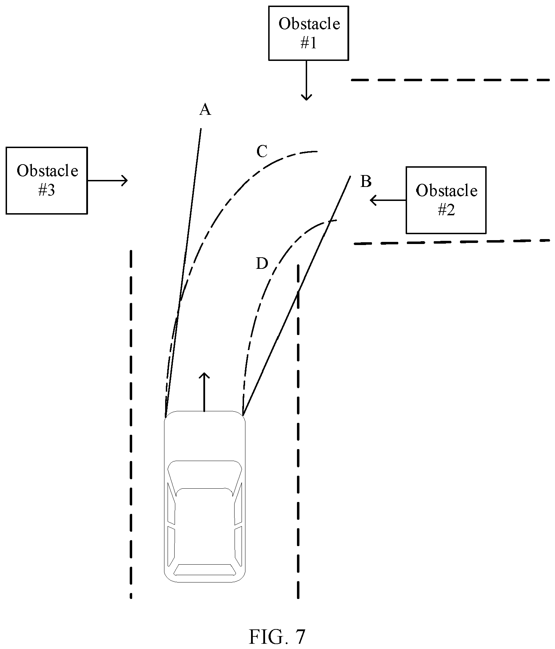

In an anti-collision warning scenario shown in FIG. 7, the focus sector of the driver is an area between a straight line A and a straight line B in FIG. 7. To be specific, the focus sector includes the right field of view sector of the front vehicle window. The driving intention of the driver is to turn right. A curve C and a curve D represent the predicted traveling track of the vehicle. An obstacle #1 is a moving object in the focus sector, an obstacle #2 and an obstacle #3 are moving objects outside the focus sector, and the obstacle 2 is an obstacle in the blind zone. A moving direction of the obstacle #1 is consistent with a moving direction of the vehicle, and moving directions of the obstacle #2 and the obstacle #3 overlap the predicted traveling track of the vehicle. In this scenario, even if the driver has focused on the obstacle #1 and uses an obstacle avoidance manner of braking and deceleration, because both the obstacle #2 and the obstacle #3 may still pose a danger, the anti-collision warning still needs to be issued. That is, an obtained control policy is: issuing the anti-collision warning.

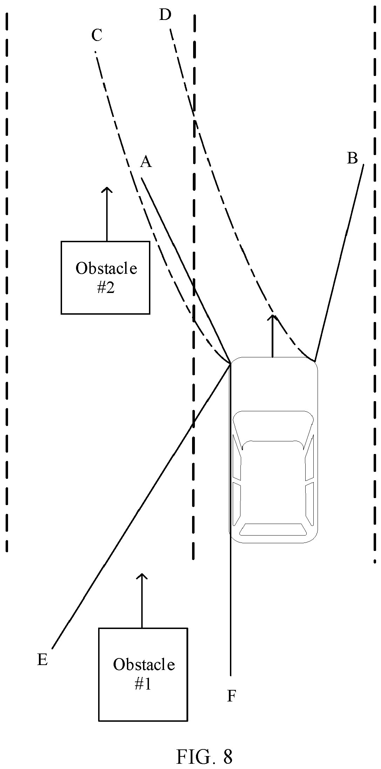

In an anti-collision warning scenario shown in FIG. 8, the focus sectors of the driver are an area between a straight line A and a straight line B and an area between a straight line E and a straight line F in FIG. 8. To be specific, the focus sector includes the field of view sector of the front vehicle window (or the left field of view sector of the front vehicle window and the right field of view sector of the front vehicle window) and the field of view sector of the left rearview mirror. The driving intention of the driver is to change the lane to the left. A curve C and a curve D represent the predicted traveling track of the vehicle. An obstacle #1 is a moving object in the focus sector, and an obstacle #2 is a moving object outside the focus sector. Moving directions of the obstacle #1 and the obstacle #2 are consistent with a moving direction of the vehicle. In this scenario, even if the driver has focused on the obstacle #1, because the obstacle #2 may still pose a danger, the anti-collision warning still needs to be issued. That is, an obtained control policy is: issuing the anti-collision warning. It is assumed that in this scenario, the focus sector of the driver further includes the field of view sector of the left vehicle window. In this case, the obstacle #2 becomes a moving obstacle in the focus sector, and the driver has noticed two obstacles. In this case, the anti-collision warning may not be issued. That is, an obtained control policy is that the anti-collision warning is not issued.

In addition, it is assumed that FIG. 8 is a lane departure warning scenario. In this case, because it is already known that the driving intention of the driver is to change the lane to the left, a lane departure warning may not be issued. That is, an obtained control policy is: issuing the lane departure warning.

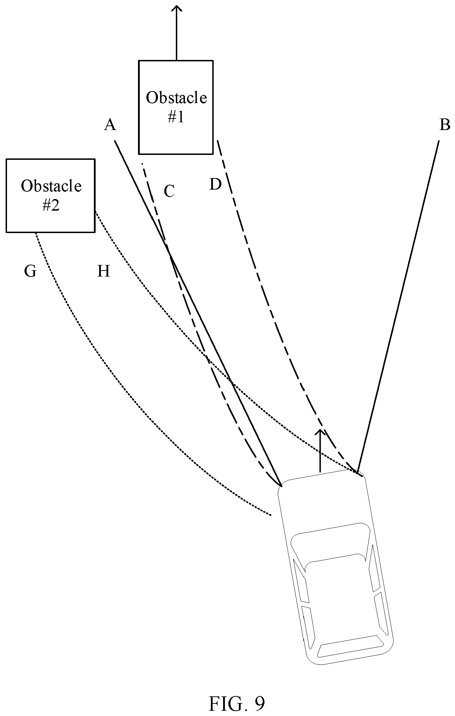

In an anti-collision warning scenario or a longitudinal driving assistance scenario shown in FIG. 9, the focus sector of the driver is the area between the straight line A and the straight line B in FIG. 8. To be specific, the focus sector includes the field of view sector of the front vehicle window (or the left field of view sector of the front vehicle window and the right field of view sector of the front vehicle window). A curve C and a curve D represent a predicted traveling track #1 of the vehicle, and a curve G and a curve H represent a predicted traveling track #2 of the vehicle. The predicted traveling track #1 is obtained with reference to the driving intention of the driver, the predicted traveling track #2 is obtained without considering the driving intention of the driver, and there is a deviation between the predicted traveling track #1 and the predicted traveling track #2. An obstacle #1 is a moving object in the focus sector, and an obstacle #2 is a static object outside the focus sector. In this scenario, the driver has focused on the obstacle #1. Although the driver does not focus on the obstacle #2, because the obstacle #2 is not on the predicted traveling track #1 of the vehicle, the anti-collision warning does not need to be issued or the autonomous emergency braking does not need to be performed. That is, an obtained control policy is that the anti-collision warning is not issued or the autonomous emergency braking does not need to be performed. It is assumed that in this scenario, the driving intention of the driver is not considered. In this case, the obstacle #2 becomes an obstacle that is outside the focus sector and that is on the predicted traveling track. An obtained control policy is: issuing the anti-collision warning or performing the autonomous emergency braking, resulting in incorrect control and affecting driving experience.

FIG. 9 mainly shows a difference of the control policies between a case in which the driving intention is considered and a case in which the driving intention is not considered.

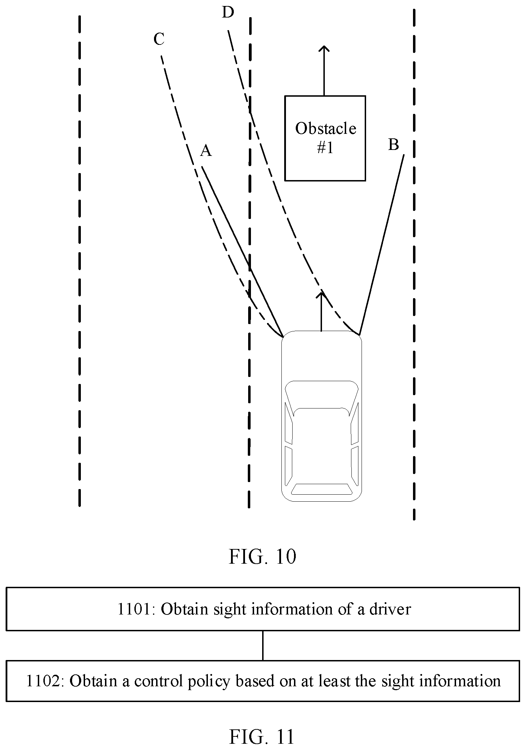

In a horizontal driving assistance scenario shown in FIG. 10, the focus sector of the driver is an area between a straight line A and a straight line B in FIG. 10. To be specific, the focus sector includes the field of view sector of the front vehicle window (or the left field of view sector of the front vehicle window and the right field of view sector of the front vehicle window). The driving intention of the driver is to change the lane to the left. A curve C and a curve D represent the predicted traveling track of the vehicle. An obstacle #1 is a moving object in the focus sector, and the obstacle #1 is not on the predicted traveling track of the vehicle. In this scenario, a driving track of the driver is biased towards a left lane. Therefore, a lane keeping assist warning or a lane departure warning does not need to be issued. That is, an obtained control policy is: the lane keeping assist warning or the lane departure warning is not issued. If the driving intention is not considered, because the focus sector of the driver is in the front, it is very likely that the predicted traveling track is still in the lane, that is, it is predicted that the vehicle keeps driving in the lane. As a result, the warning policy is to issue a warning, affecting driving experience. In addition, in this scenario, autonomous lane changing may be further performed based on the driving intention of changing the lane to the left, to improve driving experience.

It should be understood that FIG. 5 to FIG. 10 are merely examples of some driving scenarios, and may be further applied to other control policies. The control policies are not listed one by one.

FIG. 11 is a schematic flowchart of a vehicle control method according to an embodiment of this application. The following describes steps in FIG. 11.

1101: Obtain sight information of a driver, where the sight information includes a focus sector.

For explanations of the sight information and the focus sector and a manner of obtaining the sight information, refer to the foregoing related descriptions. Details are not described again.

In some implementations, the focus sector is obtained based on at least blind zone information and/or obstacle information. In other words, a factor of a blind zone and/or an obstacle is considered in a process of determining the focus sector, and a corresponding adjustment is made. Alternatively, it may be understood that impact of the blind zone and/or the obstacle is eliminated when the focus sector is determined. In this way, accuracy of the focus sector, that is, accuracy of the sight information, can be improved, so that accuracy of vehicle control is improved.

1102: Obtain a control policy based on at least the sight information.

For the control policy, refer to the foregoing related descriptions. Details are not described again.

Optionally, the control policy may include at least one of the following: an anti-collision warning policy, an autonomous emergency braking policy, an adaptive cruise control policy, a lane departure warning policy, a lane keeping assist policy, a lane centering assist policy, or the like.

In some implementations, a driving intention of the driver may be obtained based on the sight information and vehicle information. The driving intention may be lane keeping, turning, lane changing, or the like, or may be acceleration, deceleration, parking, or the like.

In some other implementations, the control policy may be obtained based on the driving intention and the sight information. For example, assuming that the driving intention of the driver is lane keeping, a static obstacle in another lane may not be considered. The control policy may be obtained based only on the driving intention, or the control policy may be obtained based on the driving intention and the sight information. Alternatively, the control policy may be further obtained with reference to another factor such as a predicted traveling track of the vehicle.

In some other implementations, the driving intention of the driver may be first obtained based on the sight information and the vehicle information, and the control policy is then obtained based on the driving intention.

The driving intention may be obtained with a model such as a trained neural network model. For example, the sight information and the vehicle information may be processed with the trained neural network model, to obtain the driving intention. The neural network model may be understood as a model that establishes a correspondence between an input and an output. The input is the sight information and the vehicle information, and the output is the driving intention. It may be understood that the neural network model establishes a mapping relationship between input data and a label. Herein, a mapping relationship between the sight information and the driving intention and a mapping relationship between the vehicle information and the driving intention are established. Training makes the foregoing mapping relationships more accurate.

The neural network model may be a convolutional neural network, a deep neural network, a recurrent neural network, a long short-term memory neural network, or the like. Training data includes input data and a label, the input data includes the sight information and the vehicle information, the label includes the driving intention, and each piece of input data corresponds to one label. In a training process, the training data is used to update parameters of the neural network model (for example, an initial neural network model), to obtain a trained neural network model. The trained neural network model may be used in the foregoing vehicle control method.

In some other implementations, the control policy may alternatively be obtained based on a reaction time and the focus sector, or the control policy may be obtained based on the reaction time and the driving intention, or the control policy may be obtained based on the reaction time, the driving intention, and the focus sector. For description of the reaction time, refer to the foregoing description.

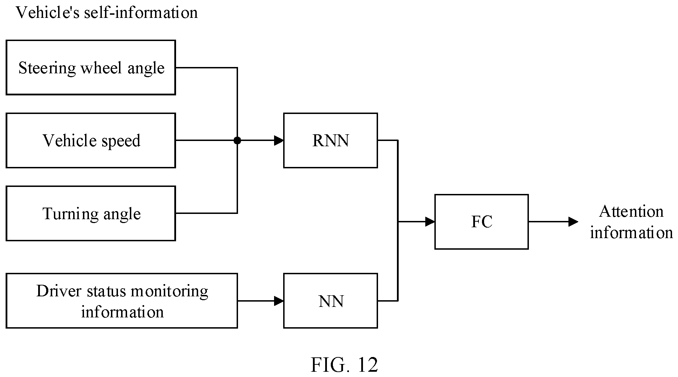

As described above, the reaction time may be obtained with reference to the attention information. The following describes a method for obtaining the attention information with reference to FIG. 12.

FIG. 12 is a schematic diagram of a method for obtaining attention information according to an embodiment of this application. As shown in FIG. 12, vehicle information and driver status monitoring information may be processed with a neural network model, to obtain the attention information.

Optionally, the vehicle information such as a steering wheel angle, a vehicle speed, and a turning angle (that is, a turning angle of a headstock) may be processed with a neural network model represented by RNN in the figure, and the driver status monitoring information may be processed with a neural network model represented by NN in the figure. Results obtained through the foregoing processing are input into a fully connected (fully connected, FC) layer represented by FC in the figure, to obtain attention information. The attention information is information indicating an attention degree of the driver.

In some implementations, a neural network used to process the vehicle information may be, for example, a recurrent neural network such as an LSTM, and a neural network used to process the driver status monitoring information may be, for example, a multilayer perceptron (multilayer perceptron, MLP) neural network.

The neural network model may also be obtained through training with the training data. For a process, refer to the foregoing description of training of the neural network model.

It should be understood that, the RNN, the NN, and the FC in the foregoing figure may be considered as jointly forming an attention model. Inputs to the attention model are the vehicle information and the driver status monitoring information, and an output is the attention information. Alternatively, it may be understood that the attention model is used to process the vehicle information and the driver status monitoring information, to obtain the attention information. In a specific example, the attention model includes an LSTM, an MLP, and an FC. The LSTM is configured to: process the vehicle information, and input an obtained processing result into the FC. The MLP is configured to: process the driver status monitoring information, and input an obtained processing result into the FC. The FC is configured to continue processing the processing results from the LSTM and the MLP to obtain the attention information.

In the method shown in FIG. 11, the focus sector represents a field of view range of the driver, so that stability of field of view range detection is improved, thereby improving accuracy of vehicle control.

Optionally, the method shown in FIG. 11 may further include: displaying the focus sector on a display unit. The display unit may be an in-vehicle display screen, a human-machine interaction interface, or the like.

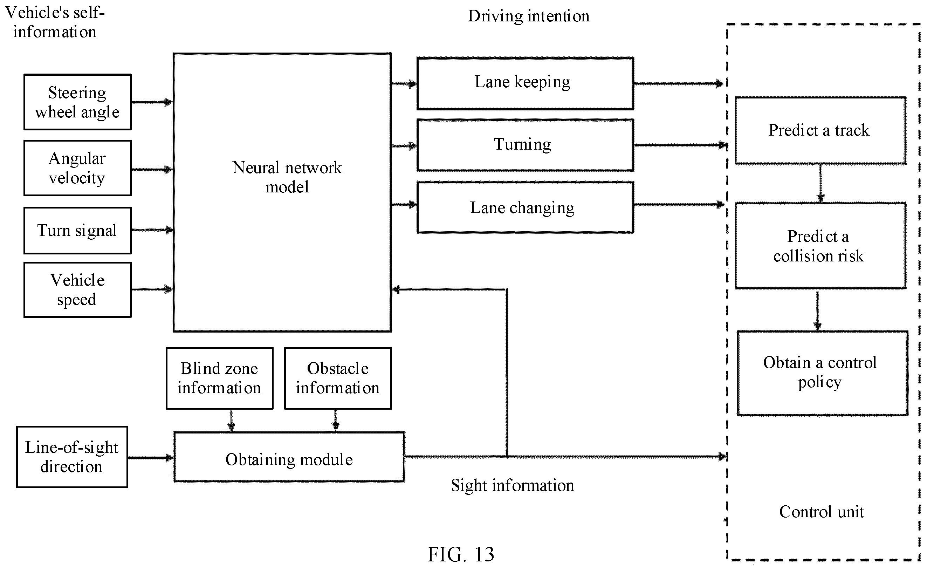

FIG. 13 is a schematic diagram of a vehicle control process according to an embodiment of this application. FIG. 13 may be considered as a specific example of vehicle control performed based on the method shown in FIG. 11, and a control policy of an anti-collision warning is mainly used as an example.

As shown in FIG. 13, an obtaining module obtains a line-of-sight direction, blind zone information, and obstacle information, and obtains sight information based on the line-of-sight direction, the blind zone information, and the obstacle information. The sight information includes a focus sector. This process may be considered as a specific example of step 1101, that is, the focus sector is obtained based on the line-of-sight direction, the blind zone information, and the obstacle information. The obtaining module herein may be considered as an example of the obtaining module 110 shown in FIG. 1.

As shown in FIG. 13, a neural network model performs driving intention analysis based on vehicle information and the sight information, to obtain a driving intention of a driver. The vehicle information includes steering wheel turning, an angular velocity, a turn signal, and a vehicle speed, and the driving intention includes lane keeping, turning, and lane changing. It should be understood that FIG. 13 is merely an example. Therefore, the vehicle information, the driving intention, and the like may further include other information, and there is no limitation. For example, the driving intention may further include parking and the like. The neural network model herein may be considered as an example of a driving intention analysis module 130 shown in FIG. 1. To be specific, the neural network model is used to process the vehicle information and the sight information, to obtain the driving intention of the driver. The neural network model is the trained neural network model.

As shown in FIG. 13, a control unit of the vehicle predicts a vehicle traveling track and a vehicle collision risk based on the driving intention and the sight information, and obtains a control policy. The control unit may be considered as a specific example of the control policy module 120 shown in FIG. 1.

In FIG. 13, the neural network model processes the vehicle information and the sight information to obtain the driving intention, and then the control unit obtains the control policy based on the driving intention and the sight information. The foregoing process may be considered as a specific example of step 1102.

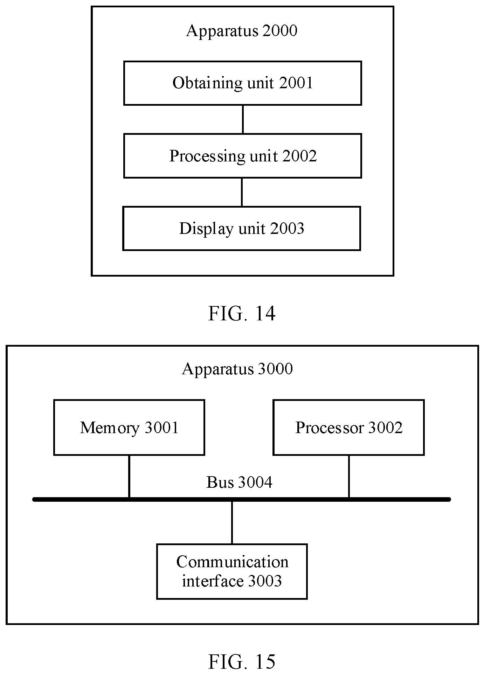

As described above, FIG. 13 may be considered as a specific example of performing vehicle control based on the method shown in FIG. 11. Therefore, there may be another example. For example, FIG. 13 may further include a reaction time. The reaction time may be obtained based on attention information. The control unit may predict the vehicle traveling track and the vehicle collision risk based on the reaction time, the driving intention, and the sight information, and obtain the control policy. For another example, FIG. 13 may further include an attention model. The attention model is used to process the vehicle information and the driver status monitoring information to obtain the attention information and the like. Details are not listed one by one herein. FIG. 14 is a schematic block diagram of a vehicle control apparatus according to an embodiment of this application. An apparatus 2000 shown in FIG. 14 includes an obtaining unit 2001 and a processing unit 2002.

The obtaining unit 2001 and the processing unit 2002 may be configured to perform the vehicle control method in embodiments of this application. Specifically, the obtaining unit 2001 may perform the foregoing step 1101, and the processing unit 2002 may perform the foregoing step 1102.

The apparatus 2000 may be the vehicle control apparatus 100 shown in FIG. 1, the obtaining unit 2001 may include the obtaining module 110 shown in FIG. 1, and the processing unit 2002 may include the control policy module 120 shown in FIG. 1. The processing unit 2002 may further include a driving intention analysis module 130.

The apparatus 2000 may further include a display unit 2003, and the display unit 2003 is configured to display the foregoing focus sector. The display unit 2003 may be further configured to present a warning signal to a driver in a form of a picture. The display unit 2003 may be further integrated into the processing unit 2002.

It should be understood that the processing unit 2002 in the apparatus 2000 may be equivalent to a processor 3002 in an apparatus 3000 in the following.

FIG. 15 is a schematic diagram of a hardware structure of a vehicle control apparatus according to an embodiment of this application. A vehicle control apparatus 3000 (the apparatus 3000 may be specifically a computer device) shown in FIG. 15 includes a memory 3001, a processor 3002, a communication interface 3003, and a bus 3004. The memory 3001, the processor 3002, and the communication interface 3003 are communicatively connected to each other with the bus 3004.

The memory 3001 may be a read only memory (read only memory, ROM), a static storage device, a dynamic storage device, or a random access memory (random access memory, RAM). The memory 3001 may store a program. When the program stored in the memory 3001 is executed by the processor 3002, the processor 3002 and the communication interface 3003 are configured to perform the steps of the vehicle control method in embodiments of this application.

The processor 3002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement functions that need to be performed by units in the vehicle control apparatus in this embodiment of this application, or perform the vehicle control method in method embodiments of this application.

Alternatively, the processor 3002 may be an integrated circuit chip and has a signal processing capability. In an implementation process, the steps of the vehicle control method in this application may be implemented with an integrated logic circuit of hardware in the processor 3002 or instructions in a form of software. Alternatively, the processor 3002 may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. The processor 3002 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished with a hardware decoding processor, or may be executed and accomplished with a combination of hardware and software modules in the decoding processor. A software module may be located in a mature storage medium in the art, such as a random access memory, a flash memory, a read only memory, a programmable read only memory, an electrically erasable programmable memory, or a register. The storage medium is located in the memory 3001. The processor 3002 reads information in the memory 3001, and completes, in combination with hardware of the processor 3002, functions that need to be performed by the units included in the vehicle control apparatus in this embodiment of this application, or performs the vehicle control method in method embodiments of this application.

The communication interface 3003 uses a transceiver apparatus, for example but not for limitation, a transceiver, to implement communication between the apparatus 3000 and another device or a communication network. For example, the foregoing sight information may be obtained with the communication interface 3003.

The bus 3004 may include a path for transmitting information between components (for example, the memory 3001, the processor 3002, and the communication interface 3003) of the apparatus 3000.

It should be noted that, although only the memory, the processor, and the communication interface are shown in the apparatus 3000 shown in FIG. 15, in a specific implementation process, a person skilled in the art should understand that the apparatus 3000 further includes other devices necessary for implementing normal operation. In addition, based on a specific requirement, a person skilled in the art should understand that the apparatus 3000 may further include a hardware device for implementing another additional function. In addition, a person skilled in the art should understand that the apparatus 3000 may include only devices required for implementing embodiments of this application, and does not necessarily include all the devices shown in FIG. 15.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different apparatuses to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, method, and apparatus may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented with some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes a USB flash disk (USB flash disk, UFD). The UFD may also be referred to as any medium that can store program code in short, such as a U disk or a flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle control method, comprising:
obtaining sight information of a driver, wherein the sight information comprises a focus sector of the driver, and the focus sector comprises at least one of a plurality of field of view sectors of a vehicle; and
obtaining a control policy of the vehicle based on at least the sight information.

2. The method according to claim 1, wherein the obtaining a control policy of the vehicle based on at least the sight information comprises:
obtaining the control policy based on the sight information and vehicle information of the vehicle, wherein the vehicle information comprises at least one of the following: a steering wheel angle, an angular velocity, a turn signal, or a vehicle speed.

3. The method according to claim 2, wherein the obtaining the control policy based on the sight information and vehicle information of the vehicle comprises:
processing the sight information and the vehicle information by using a trained neural network model, to obtain a driving intention of the driver, wherein the driving intention is lane keeping, turning, or lane changing; and
obtaining the control policy based on the driving intention.

4. The method according to any one of claims 1 to 3, wherein the plurality of field of view sectors comprise: a field of view sector of a left vehicle window, a field of view sector of a left rearview mirror, a field of view sector of a front vehicle window, a field of view sector of an in-vehicle rearview mirror, a field of view sector of a right vehicle window, and a field of view sector of a right rearview mirror.

5. The method according to claim 4, wherein the field of view sector of the front vehicle window comprises a left field of view sector of the front vehicle window and a right field of view sector of the front vehicle window.

6. The method according to any one of claims 1 to 5, wherein the focus sector is obtained based on at least blind zone information and/or obstacle information.

7. The method according to any one of claims 1 to 6, wherein the focus sector is obtained based on at least a line-of-sight direction of the driver.

8. The method according to any one of claims 1 to 7, wherein the control policy comprises at least one of the following: an anti-collision warning policy, an autonomous emergency braking policy, an adaptive cruise control policy, a lane departure warning policy, a lane keeping assist policy, or a lane centering assist policy.

9. The method according to any one of claims 1 to 8, wherein the method further comprises:
displaying the focus sector on a display unit.

10. A vehicle control apparatus, comprising:
an obtaining unit, configured to obtain sight information of a driver, wherein the sight information comprises a focus sector of the driver, and the focus sector comprises at least one of a plurality of field of view sectors of a vehicle; and
a processing unit, configured to obtain a control policy of the vehicle based on at least the sight information.

11. The apparatus according to claim 10, wherein the processing unit is specifically configured to:
obtain the control policy based on the sight information and vehicle information of the vehicle, wherein the vehicle information comprises at least one of the following: a steering wheel angle, an angular velocity, a turn signal, or a vehicle speed.

12. The apparatus according to claim 11, wherein the processing unit is specifically configured to:
process the sight information and the vehicle information by using a trained neural network model, to obtain a driving intention of the driver, wherein the driving intention is lane keeping, turning, or lane changing; and
obtain the control policy based on the driving intention.

13. The apparatus according to any one of claims 10 to 12, wherein the plurality of field of view sectors comprise: a field of view sector of a left vehicle window, a field of view sector of a left rearview mirror, a field of view sector of a front vehicle window, a field of view sector of an in-vehicle rearview mirror, a field of view sector of a right vehicle window, and a field of view sector of a right rearview mirror.

14. The apparatus according to claim 13, wherein the field of view sector of the front vehicle window comprises a left field of view sector of the front vehicle window and a right field of view sector of the front vehicle window.

15. The apparatus according to any one of claims 10 to 14, wherein the focus sector is obtained based on at least blind zone information and/or obstacle information.

16. The apparatus according to any one of claims 10 to 15, wherein the focus sector is obtained based on at least a line-of-sight direction of the driver.

17. The apparatus according to any one of claims 10 to 16, wherein the control policy comprises at least one of the following: an anti-collision warning policy, an autonomous emergency braking policy, an adaptive cruise control policy, a lane departure warning policy, a lane keeping assist policy, or a lane centering assist policy.

18. The apparatus according to any one of claims 10 to 17, wherein the apparatus further comprises:
a display unit, configured to display the focus sector.

19. A computer-readable storage medium, wherein the computer-readable medium stores program code to be executed by a device, and the program code comprises instructions used to perform the method according to any one of claims 1 to 9.

20. A vehicle control apparatus, wherein the apparatus comprises a processor and a data interface, and the processor reads, by using the data interface, instructions stored in a memory, to perform the method according to any one of claims 1 to 9.

21. A computer program product, wherein when the computer program is executed on a computer, the computer is enabled to perform the method according to any one of claims 1 to 9.
